# EUROPÄISCHE PATENTSCHRIFT

(11) **EP 2 955 475 B1**
(45) Veröffentlichungstag und Bekanntmachung des Hinweises auf die Patenterteilung: **20.09.2017**
(21) Anmeldenummer: 15001398.5
(22) Anmeldetag: 08.05.2015
(51) Int. Cl.: F41H 11/02, F41G 3/04

(54) **VERFAHREN ZUM BETREIBEN EINES BODENGEBUNDENEN LUFTABWEHRSYSTEMS**
METHOD FOR OPERATING A LAND-BASED AIR DEFENSE SYSTEM
PROCÉDÉ DE FONCTIONNEMENT D'UN SYSTÈME DE DÉFENSE AÉRIENNE BASÉ À TERRE

(30) Priorität: 17.05.2014 DE 102014007308
(43) Veröffentlichungstag der Anmeldung: 16.12.2015
(73) Patentinhaber: Diehl Defence GmbH & Co. KG, 88662 Überlingen (DE)
(72) Erfinder: Kempas, Thorsten, 88662 Überlingen (DE); Lange, Ralf, 75179 Pforzheim (DE); Masur, Michael, 88662 Überlingen (DE); Drexler, Thomas, 88696 Owingen (DE); Lindenau, Bernd, 88214 Ravensburg (DE); Selz, Andre, 88662 Überlingen (DE); Schulze, Rainer, 88696 Owingen (DE)
(74) Vertreter: Diehl Patentabteilung

(56) Entgegenhaltungen:
- DE-A1-102007 007 404
- US-A- 4 641 801
- US-A1- 2005 131 933
- US-A1- 2008 120 373
- US-A1- 2012 316 819

## Beschreibung

Die Erfindung betrifft ein Verfahren zum Betreiben eines bodengebundenen Luftabwehrsystems mit einer Gruppe von Hauptsystemkomponenten, die ein Sensorsystem, einen Führungsgefechtsstand und ein Effektorsystem beinhaltet, bei dem Sensordaten über ein zu bekämpfendes Ziel vom Sensorsystem an den Führungsgefechtsstand gegeben, dort bearbeitet und in bearbeiteter Form vom Führungsgefechtsstand an das Effektorsystem gegeben werden, das anhand der Daten das Ziel bekämpft.

Ein bodengebundenes Luftabwehrsystem dient zum Bekämpfen von Luftfahrzeugen vom Boden aus. Hierzu umfasst das Luftabwehrsystem üblicherweise ein Sensorsystem mit einem Sensor, einem Führungsgefechtsstand und ein Effektorsystem. Das Sensorsystem, in der Regel ein Radarsystem auf einem Lastkraftwagen, spürt das Luftfahrzeug sensorisch auf und bestimmt Richtungsdaten und Geschwindigkeitsdaten des Luftfahrzeugs. Diese Daten gibt das Sensorsystem an den Führungsgefechtsstand weiter, der das Effektorsystem steuert. Das Effektorsystem umfasst üblicherweise eine oder mehrere Effektoreinheiten. Das Effektorsystem weist beispielsweise eine auf einem Lastkraftwagen angeordnete Werfereinrichtung auf, die mehrere in Kanistern gelagerte Effektoreinheiten in Form von Luftabwehrraketen enthält. Die Luftabwehrraketen werden vom Führungsgefechtsstand gestartet und vom Führungsgefechtsstand und/oder dem Sensorsystem in Richtung zum zu bekämpfenden Ziel gelenkt.

Ein Führungsgefechtsstand, auch Tactical Operation Control (TOC) genannt, umfasst in der Regel eine zentrale Steuereinheit, die eine so genannte Sensor Fire and Weapon Control (SFWC) umfassen kann. Außerdem kann ein Führungsgefechtsstand eine Feuerleitstelle beinhalten, durch die Bedienereingaben oder externe Informationen von einem weiteren Gefechtstand oder einer anderen Leitstelle aufgenommen werden können. Der Führungsgefechtsstand ist mit den anderen Hauptsystemkomponenten verbunden, also dem Sensorsystem und dem Effektorsystem, und steuert zentral die Gefechtsoperationen.

Das Dokument DE 102007007404 A1 offenbart eine Vorrichtung zum Schutz gegen Angriffsmonitionskörper sowie ein Verfahren zum Betreiben desselbigen. Die Vorrichtung zum Schutz gegen Angriffsmonitionskörper umfasst eine Ortungseinrichtung, eine Messeinrichtung, einen Feuerleitrechner, eine Signalsendeeinheit und eine Waffe. Der Datenaustausch zwischen den einzelnen Komponenten findet im Wesentlichen über den Feuerleitrechner statt.

Das Dokument US 4641801 A offenbart ein bodengebundenes Luftabwehrsystem sowie ein Verfahren zum Betreiben desselbigen. Das Luftabwehrsystem umfasst ein Radarsystem, ein Winkelmessgerät, einen Feuerleitrechner und eine Waffe. Auch hier findet der Datenaustausch zwischen den einzelnen Komponenten im Wesentlichen über den Feuerleitrechner statt.

Ferner offenbar das Dokument US 2005/0131933 A1 ein Netzwerk in einem Schlachtfeld, wobei die Netzwerkteilnehmer miteinander kommunizieren. Um die Kompatibilität zwischen verschiedenen Kommunikationssystemen zu erhöhen wird der Standard der Anforderungen an den Informationsaustausch (information exchange requirements IER) eingesetzt. Das Dokument offenbart weiter eine Methode wie ein Vielzahl von IERs, welche zur Kommunikation zwischen zwei Kommunikationspartner/Netzwerkteilnehmer notwendig sind in einer Datenstruktur zu einem kleineren und einfacher handhabbaren Format zusammengefasst werden können.

Außerdem offenbart das Dokument US 2008/120373 A1 ein elektronisches System eines Fahrzeugs. In dem elektronischen System sind mehrere Wandlereinheiten als Peripheriegeräte vorgesehen, sodass eine Übermittlung von umgewandelten Daten an ein externes System möglich wird.

Weitere Luftabwehrverfahren respektive Luftabwehrsysteme sind in den Dokumenten JP 2008-224195 A und EP 0097192 B1 beschrieben.

Es ist eine Aufgabe der vorliegenden Erfindung, ein Verfahren zum Betreiben eines bodengebundenen Luftabwehrsystems anzugeben, das für den Betrieb mit Hauptsystemkomponenten unterschiedlicher Hersteller geeignet ist.

Diese Aufgabe wird durch ein Verfahren gemäß dem unabhängigen Anspruch 1 gelöst, bei dem erfindungsgemäß ein zentrales Integrationsmodul mit einer Wandlereinheit und einem zentralen Datenverteiler vorhanden ist und die Daten von allen Hauptsystemkomponenten jeweils durch die Wandlereinheit zum zentralen Datenverteiler geführt und dabei in der Wandlereinheit von einem Komponentenprotokoll in ein systeminternes Datenprotokoll gewandelt werden, vom zentralen Datenverteiler wieder über die Wandlereinheit an eine oder mehrere Hauptsystemkomponenten gegeben werden, wobei die Wandlereinheit die verteilten Daten wieder vom systeminternen Datenprotokoll in ein Komponentenprotokoll zurückwandelt.

Die Erfindung geht von der Überlegung aus, dass übliche bodengebundene Luftabwehrsysteme monolithisch strukturiert sind, da bedingt durch die Komplexität der Hauptsystemkomponenten diese üblicherweise von einem einzigen Hersteller mit Steuerungskomponenten bestückt werden und diese vom Führungsgefechtsstand gesteuert werden. Muss eine Hauptsystemkomponente ausgetauscht werden, so muss auch der Führungsgefechtsstand umprogrammiert werden, gegebenenfalls bis in eine große Tiefe hinein. Hierdurch kann die Systemsicherheit verringert werden, also die Sicherheit, dass das System unter allen Umständen funktioniert.

Die Erfindung sieht vor, dass zusätzlich zu den Hauptsystemkomponenten ein zentrales Integrationsmodul vorhanden ist. Dieses zentrale Modul erleichtert die Anbindung der Hauptsystemkomponenten aneinander. Das zentrale Integrationsmodul dient dazu, die von den Hauptsystemkomponenten kommenden Daten zu vereinheitlichen und die an die Hauptsystemkomponenten gerichteten Daten von der vereinheitlichten Form in die Komponenten Form zu bringen. Die Vereinheitlichung umfasst insbesondere das Bringen von einem Komponentenprotokoll in ein zentrales Protokoll.

Zweckmäßigerweise werden Daten von allen Hauptsystemkomponenten jeweils durch die Wandlereinheit zum zentralen Datenverteiler geführt und dabei in der Wandlereinheit von einem Komponentenprotokoll in ein systeminternes Datenprotokoll gewandelt und vom zentralen Datenverteiler wieder über die Wandlereinheit an eine oder mehrere Hauptsystemkomponenten gegeben, wobei die Wandlereinheit die verteilten Daten wieder vom systeminternen Datenprotokoll in ein Komponentenprotokoll zurückwandelt.

Das zentrale Integrationsmodul umfasst vorteilhafterweise eine Wandlereinheit und einen zentralen Datenverteiler und dient in der Art eines Programmierschilds dazu, Veränderungen in der Programmierung nur in der Wandlereinheit durchführen zu müssen. Kernfunktionen, die zur Steuerung der taktischen Operationen bestimmt sind, können unangetastet verbleiben, da aus der Wandlereinheit nach innen ausgegebene Daten unabhängig von der Protokollart der Hauptsystemkomponenten sind. Spezielle Komponenteneigenheiten der Hauptsystemkomponenten hinsichtlich ihrer Programmierung, also eines Datenprotokolls und insbesondere eines Datenformats und dergleichen, können bereits in der Wandlereinheit aufgefangen und nach innen hin standardisiert werden, sodass nach innen hin, also zu den anderen Hauptsystemkomponenten und den Kernfunktionen hin, zweckmäßigerweise nur standardisierte Daten verteilt werden. Eine solche Standardisierung kann sich an Militärstandards, zum Beispiel Link 16, oder Industriestandards orientieren. Auf diese Weise können Hauptsystemkomponenten verschiedener Hersteller miteinander zu einem bodengebundenen Luftabwehrsystem verbunden werden, ohne dass zentrale Funktionen verändert werden müssen und ohne die Systemsicherheit zu beeinträchtigen.

Unter einem Sensorsystem wird im Folgenden ein System mit einem oder mehreren Sensoren verstanden, die zumindest Positionsdaten über ein zu bekämpfendes Luftziel sensorisch erfassen und über eine Sensorschnittstelle zur Verfügung stellen.

Unter einem Führungsgefechtsstand kann eine Einheit verstanden werden, die die taktische Steuerung des Effektorsystems und insbesondere auch des Sensorsystems ausführt. Er beinhaltet insbesondere eine zentrale Steuereinheit zum Steuern der anderen Hauptsystemkomponenten, beispielsweise eine so genannte Sensor Fire and Weapon Control. Der Führungsgefechtsstand gibt beispielsweise Gefechtseinsatzdaten an das zentrale Integrationsmodul. Dort werden diese bearbeitet und in bearbeiteter Form vom zentralen Integrationsmodul an das Sensorsystem gegeben. Das Sensorsystem kann anhand der Gefechtseinsatzdaten das Ziel aufspüren und Zieldaten erzeugen und an das zentrale Integrationsmodul weitergeben.

Ein Effektorsystem ist ein System mit zumindest einer Effektoreinheit zum Bekämpfen eines Luftfahrzeugs, beispielsweise eine Luftabwehrrakete. Zweckmäßigerweise umfasst das Effektorsystem auch ein Startgerät zum Starten der Effektoreinheit, beispielsweise einen Kanister mit integrierter Abschussvorrichtung für die im Kanister gelagerte Effektoreinheit, und insbesondere auch eine Werfereinrichtung zum Bewegen der Kanister. Auch eine Beladeeinheit zum Beladen eines Kanisters mit einer oder je nach Ausgestaltung des Kanisters mit mehreren Effektoreinheiten, kann Teil des Effektorsystems sein. Eine Beladeeinheit kann jedoch auch als eine weitere Hauptsystemkomponente verstanden werden, die ebenfalls zentral an das Integrationsmodul angebunden sein kann.

Das zentrale Integrationsmodul kann örtlich an eine Hauptsystemkomponente angebunden sein, beispielsweise in einem Fahrzeug integriert sein, das den Führungsgefechtsstand und/oder das Sensorsystem umfasst. Es kann zusätzlich zur reinen Vereinheitlichungsfunktion auch Kernfunktionen enthalten, die der taktischen Steuerung des bodengebundenen Luftabwehrsystems dienen. Die Wandlereinheit ist ein Schild, das grundsätzlich zwischen die Hauptsystemkomponenten und den zentralen Datenverteiler zwischengeschaltet ist. Auch Kernfunktionen können an den zentralen Datenverteiler angeschlossen sein, sodass Daten zwischen den Kernfunktionen und den Hauptsystemkomponenten immer die Wandlereinheit passieren müssen.

Die Hauptsystemkomponenten umfassen grundsätzlich eine Systemschnittstelle zur Ausgabe von in der Hauptsystemkomponente erarbeiteten Daten, beispielsweise Sensordaten, und zur Aufnahme von Befehlen zur Durchführung von Arbeitsverfahren. Diese Komponentenschnittstellen sind zur Kommunikation mit einem Komponentenprotokoll vorbereitet, das der Hersteller festgelegt und zur Einbindung in andere Systeme beschrieben hat. Die Komponentenprotokolle können von Hersteller zu Hersteller unterschiedlich sein. Beispielsweise können sich die Komponentenprotokolle von Hauptsystemkomponenten unterschiedlicher Hersteller, wenn man das OSI-Modell zugrunde legt, insbesondere in den Schichten oberhalb der Transportschicht voneinander unterscheiden, wie beispielsweise in der Anwendungsschicht. Diese unterschiedlichen Komponentenprotokolle werden in ein einziges systeminternes Datenprotokoll gewandelt, sodass die zum zentralen Datenverteiler geführten Daten, unabhängig von welcher Hauptsystemkomponente sie kommen, im systeminternen Datenprotokoll an den zentralen Datenverteiler gegeben werden. Dieses systeminterne Datenprotokoll kann ein generisches Messaging System sein, das also für alle Datenlinien von und zu den Hauptkomponentensystemen allgemeingültig ist.

In einer vorteilhaften Ausführungsform der Erfindung weist die Wandlereinheit für jede Hauptsystemkomponente ein eigenes Wandlerelement auf, das die Daten von und zu ihrer Hauptsystemkomponente wandelt. Das Wandlerelement kann eine Hardwarekomponente oder lediglich eine Softwarekomponente sein, die zweckmäßigerweise nur die Daten von und zu ihrer Hauptsystemkomponente wandelt. Es ist also vorteilhafterweise für jede Hauptsystemkomponente nur ein und genau ein Wandlerelement vorhanden, das dieser Hauptsystemkomponente zugeordnet ist. Wird eine Hauptsystemkomponente ausgetauscht und durch eine andere ersetzt, so reicht es aus, auch nur das Wandlerelement der Wandlereinheit auszutauschen, das für diese Hauptsystemkomponente zuständig ist. Alle übrigen Hardware- und/oder Softwarekomponenten können unverändert verbleiben. Jedes Wandlerelement kann jeweils ein Anpassungselement und ein Verbindungselement umfassen, die als getrennte Elemente vorhanden, ggf. nur als solche programmiert sind. Weiterhin kann jedes Wandlerelement dazu vorbereitet sein, sich bei dem zentralen Datenverteiler für die Daten zu registrieren, die ihre zugeordnete Hauptsystemkomponente benötigt.

Jede Hauptsystemkomponente muss gesteuert werden, um die ihr zugewiesenen Operationen durchführen zu können. Hierzu bedarf es einer Steuerfunktion, die Operationsbefehle umwandelt, beispielsweise vom Führungsgefechtsstand in Steuerbefehle für eine andere Hauptsystemkomponente. Diese Steuerung wird zweckmäßigerweise von der Wandlereinheit des zentralen Integrationsmoduls übernommen. Die Vorgaben, wie taktische Befehle vom Führungsgefechtsstand, kommen hierbei vom zentralen Datenverteiler und werden in der Wandlereinheit in komponentenbezogene Steuerbefehle zur Steuerung der Hauptsystemkomponente umgewandelt.

Eine weitere vorteilhafte Ausgestaltung der Erfindung sieht vor, dass die Wandlereinheit im Datenstrom von einer Hauptsystemkomponente vorliegende Steuerdaten und Operationsdaten voneinander trennt und nur die Operationsdaten an den zentralen Datenverteiler weiterleitet. Die Daten von und zu einer Hauptsystemkomponente enthalten üblicherweise Operationsdaten, also für die Boden-Luft-Zielbekämpfung relevante Daten, wie Position, Entfernung und Geschwindigkeit eines zu bekämpfenden Ziels, und Steuerdaten, die zur Steuerung der Hauptsystemkomponente dienen, wie Anweisungen zum Betriebsmodus der Hauptsystemkomponente, so genannte heart beat Daten oder Daten zu einem Verbindungsaufbau, Verbindungsabbau, einem Login oder dergleichen. In der Regel sind Steuerdaten von und zu einer Hauptsystemkomponente für die anderen Hauptsystemkomponenten irrelevant. Insofern ist es vorteilhaft, diese von den Operationsdaten, die für eine andere Hauptsystemkomponente bestimmt und von dieser verarbeitet werden, zu trennen, sodass im zentralen Datenverteiler tatsächlich nur weiter zu verteilende Daten bzw. Operationsdaten vorliegen. Auf diese Weise kann eine Datenstruktur vereinfacht und Übertragungsfehler können verringert werden.

Die von einer Hauptsystemkomponente gelieferten Operationsdaten können in einem Datenformat vorliegen, das von einer anderen Hauptsystemkomponente nicht in einer sinnvollen Weise verarbeitet werden kann. Beispielsweise kann es vorkommen, dass das Sensorsystem Richtungsdaten in einem internen Bezugssystem beziehungsweise Koordinatensystem angibt, das aber der anderen Hauptsystemkomponente unbekannt ist. Auch Maßeinheiten können unterschiedlich sein, sodass beispielsweise eine Entfernungs- oder Geschwindigkeitsangabe in unterschiedlichen Maßeinheiten geliefert beziehungsweise benötigt wird. Um solche unterschiedlichen Komponentenformate kompatibel zueinander zu machen, wird vorgeschlagen, dass die Wandlereinheit von einer Hauptsystemkomponente empfangene Operationsdaten von einem Komponentenformat, also einem Format, das der Hauptkomponente zueigen ist, in ein systeminternes Datenformat wandelt und in diesem Format an den zentralen Datenverteiler weiterleitet. Der zentrale Datenverteiler kann diese Operationsdaten nun einer anderen Hauptsystemkomponente zur Verfügung stellen. Deren Komponentenformat kann sich vom systeminternen Datenformat unterscheiden. In diesem Fall wandelt die Wandlereinheit die Operationsdaten vom systeminternen Datenformat wieder in das Komponentenformat um, das der Hauptkomponente zueigen ist, die die Operationsdaten empfangen soll.

Operationsdaten von einer Hauptsystemkomponente können allen anderen Hauptsystemkomponenten zur Verfügung gestellt werden, auch solchen, die diese Daten nicht benötigen. Bei dieser Art der Datenverteilung ist es vorteilhaft, wenn die Wandlereinheit die für eine Hauptsystemkomponente relevanten Daten aus den Daten filtert, die im zentralen Datenverteiler allgemein zur Verfügung gestellt werden.

Ebenfalls ist es möglich, dass der zentrale Datenverteiler erkennt, von welcher Hauptsystemkomponente eingehende Operationsdaten stammen. Zweckmäßigerweise umfasst der zentrale Datenverteiler eine Liste, die beinhaltet, welche Operationsdaten von welcher Hauptsystemkomponente benötigt werden. Der zentrale Datenverteiler kann eine Adressier- und Verteilungseinheit aufweisen, in der die von einer Hauptsystemkomponente aufgenommenen und gewandelten Operationsdaten an eine andere Hauptsystemkomponente adressiert werden. Die entsprechenden Hauptsystemkomponenten, beziehungsweise die ihnen vorgeschalteten Wandlerelemente der Wandlereinheit, erhalten so automatisiert die Daten, die sie benötigen oder angefordert haben.

Es ist auch möglich, dass der zentrale Datenverteiler erkennt, welcher Klasse eingehende Operationsdaten zuzuordnen sind. Zweckmäßigerweise umfasst der zentrale Datenverteiler eine mit einer Adressier- und Verteilungseinheit zusammenwirkende Registrierungseinheit, bei der sich ein einer Hauptsystemkomponente vorgeschaltetes Wandlerelement der Wandlereinheit für eine oder mehrere Klassen von Operationsdaten, die die Hauptsystemkomponente benötigt, registrieren kann. Der Datenverteiler ist zweckmäßigerweise so ausgelegt, dass er, sobald er eingehende Operationsdaten einer Klasse empfängt, anhand der Registrierungseinheit abprüft, welche Wandlerelemente sich für diese Klasse von Operationsdaten registriert haben und diese Operationsdaten automatisch über seine Adressierungs- und Verteilungseinheit an die Wandlereinheiten weiterleitet, die sich für diese Operationsdaten registriert haben.

Die Wandlereinheit kann monolithisch programmiert oder in verschiedenen Ebenen aufgeteilt sein. Zweckmäßigerweise umfasst die Wandlereinheit eine äußere Verbindungseinheit und eine mittlere Anpassungseinheit, die also zwischen der äußeren Verbindungseinheit und dem zentralen Datenverteiler angeordnet ist. In der Verbindungseinheit werden zweckmäßigerweise die Komponentenprotokolle der Hauptsystemkomponenten in das systeminterne Datenprotokoll gewandelt beziehungsweise die Daten vom systeminternen Datenprotokoll in die Komponentenprotokolle gewandelt. In der mittleren Anpassungseinheit hingegen werden vorteilhafterweise die Operationsdaten von Komponentenformaten der Hauptsystemkomponenten in ein systeminternes Datenformat gewandelt beziehungsweise vom systeminternen Datenformat in eines der Komponentenformate eines der Hauptsystemkomponenten. Verbindungseinheit und Anpassungseinheit können in einer einzigen Hardware zusammengefasst und als Programmeinheiten geschaffen sein. Das Gleiche gilt für das gesamte zentrale Integrationsmodul, bei dem die einzelnen Einheiten Programmeinheiten sind.

Bei komplexen Datenverarbeitungsvorgängen kann es vorkommen, dass durch elektromagnetische Störungen, Rechenfehler, Komponentendefekte oder andere Schwierigkeiten Daten korrumpiert werden, sodass die Möglichkeit besteht, dass falsche Operationsbefehle an eine Hauptsystemkomponente ausgegeben werden. Um dies zu vermeiden umfasst das zentrale Integrationsmodul zweckmäßigerweise eine Datenprüfeinheit, die Originaldaten einer Hauptsystemkomponente aufnimmt und ihnen eine Signatur, beispielsweise einen Fingerprint, einen Identifikator, wie einen Hash-Wert, hinzufügt und in Richtung zum zentralen Datenverteiler weitergibt. Zweckmäßigerweise prüft die Datenprüfeinheit auch aus Richtung des zentralen Datenverteilers kommende gewandelte Daten auf Konsistenz mit den Originaldaten mit der gleichen Signatur. Anhand eines Signaturabgleichs kann die Datenprüfeinheit die gewandelten Daten den zweckmäßigerweise in der Datenprüfeinheit abgespeicherten Originaldaten zuordnen und diese auf Konsistenz, also auf Stimmigkeit prüfen. Insbesondere kann die Datenprüfeinheit kritische Funktionen betreffend die Wandlung der Daten im zentralen Datenverteiler redundant vorsehen und zur Konsistenzprüfung die Originaldaten gleichfalls einer Wandlung anhand der redundant vorgesehenen "Wandlungs"-Funktionen unterziehen, um die Originaldaten mit den über den Datenverteiler gewandelten Daten vergleichen oder zumindest deren Vergleichbarkeit erhöhen zu können. Besteht eine Inkonsistenz, so kann die Datenprüfeinheit eine Fehlerfunktion ausgeben. Die Fehlerfunktion kann die Weiterleitung der Daten an die Hauptsystemkomponente unterbrechen, eine Fehlerinformation über den aufgetretenen Fehler an den Führungsgefechtsstand senden, und/oder eine andere Maßnahme einleiten, die die Ausführung eines fehlerhaften Befehls unterbindet. Hierdurch kann die Systemsicherheit erhöht werden. Insbesondere können ungewollte Kampfhandlungen vermieden werden, wie ein ungewollter Zielwechsel und/oder eine fehlerhafte Freund-/Feind-Unterscheidung.

Außerdem betrifft die Erfindung ein bodengebundenes Luftabwehrsystem gemäß dem unabhängigen Anspruch 10, mit einer Gruppe von Hauptsystemkomponenten, die ein Sensorsystem, einen Führungsgefechtsstand und ein Effektorsystem beinhaltet.

Es wird vorgeschlagen, dass das bodengebundene Luftabwehrsystem erfindungsgemäß ein zentrales Integrationsmodul aufweist, an dem die Hauptsystemkomponenten sternförmig verbunden sind. Das zentrale Integrationsmodul ist zweckmäßigerweise zur zentralen Datenverteilung von und zu den Hauptsystemkomponenten vorbereitet. Das zentrale Integrationsmodul weist eine Wandlereinheit und einen zentralen Datenverteiler auf, die so miteinander verbunden und so ausgeführt sind, dass die Daten von den Hauptsystemkomponenten an den Datenverteiler und vom Datenverteiler an die Hauptsystemkomponenten jeweils die Wandlereinheit durchlaufen.

Zweckmäßigerweise sind Wandlereinheit und zentraler Datenverteiler so gestaltet, das die Daten in der Wandlereinheit von Datenprotokollen der Hauptsystemkomponenten in ein systeminternes Datenprotokoll beziehungsweise vom systeminternen Datenprotokoll in die Datenprotokolle der Hauptsystemkomponenten gewandelt werden.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und der erfindungsgemäßen Vorrichtung gemäß den unabhängigen Ansprüchen kombinierbar.

Die oben beschriebenen Eigenschaften, Merkmale und Vorteile der Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale.

Es zeigen:
- FIG 1: ein bodengebundenes Luftabwehrsystem mit einer Gruppe von Hauptsystemkomponenten, wie ein Radarsystem, einen Führungsgefechtsstand und vier Effektorsysteme zum Bekämpfen von Luftzielen und
- FIG 2: eine schematische Darstellung eines zentralen Integrationsmoduls, das sternförmig mit den Hauptsystemkomponenten aus FIG 1 verbunden ist.

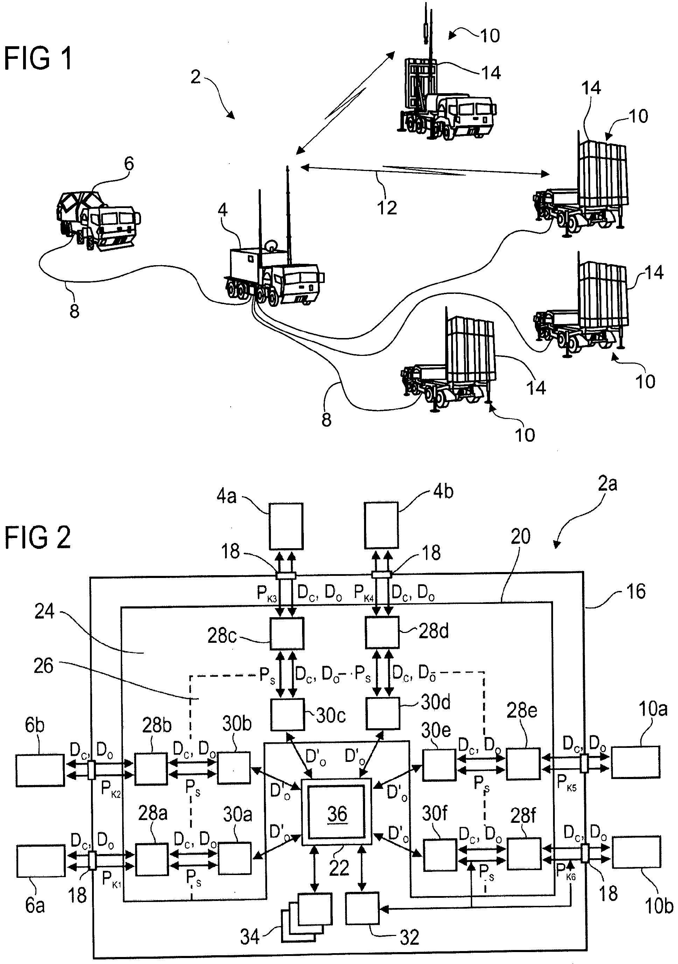

FIG 1 zeigt ein bodengebundenes Luftabwehrsystem 2, das aus einer Reihe von Fahrzeugen besteht, die informationstechnisch miteinander verbunden sind. Das Luftabwehrsystem 2 umfasst einen Führungsgefechtsstand 4 in einem auf einem Fahrzeug montierten Container, der über ein Datenkabel 8 mit einem Sensorsystem 6 verbunden ist. Das Sensorsystem 6 ist ein Radarverfolgungssystem, das dazu dient, durch das Radar erfasste Luftfahrzeuge zu verfolgen und deren Zieldaten zu erfassen. Die Zieldaten bzw. Sensordaten können die Flugrichtung, die Fluggeschwindigkeit und/oder die momentane Position des verfolgten Luftfahrzeugs sein, wobei diese Zieldaten laufend erfasst und aktualisiert werden. Die Zieldaten werden über das Datenkabel 8 an den Führungsgefechtsstand 4 übermittelt.

Im Führungsgefechtsstand 4 werden diese operativen Daten zu Einsatzdaten beziehungsweise Einsatzbefehlen verarbeitet, die an eines oder mehrere der vier vorhandenen Effektorsysteme 10 des Luftabwehrsystems 2 gegeben werden. Außerdem werden Einsatzbefehle auch an das Sensorsystem 6 gegeben, beispielsweise ob ein Luftfahrzeug weiter überwacht werden soll, wie engmaschig eine Aktualisierung der Zieldaten erfolgen soll, oder dergleichen. Die Effektorsysteme 10 sind entweder über ein Datenkabel 8 oder über eine Funkverbindung 12 mit dem Führungsgefechtsstand 4 verbunden und empfangen die vom Führungsgefechtsstand 4 empfangenen Einsatzbefehle und führen diese aus. Hierzu hat jedes Effektorsystem 10 jeweils eine Werfereinrichtung mit einer Anzahl von Kanistern 14, in denen jeweils eine Luftabwehrrakete angeordnet ist, wobei die Kanister mit einer integrierten Abschussvorrichtung zum Starten der Luftabwehrrakete ausgestattet sind. Eine solche Luftabwehrrakete kann bei entsprechendem Einsatzbefehl aus ihrem Kanister 14 gestartet werden und fliegt dann auf das vom Sensorsystem 6 erfasste Luftfahrzeug zu und bekämpft dieses.

Einsatzdaten über Einsatzstati der Effektorsysteme 10, wie den Status der Kampfbereitschaft, einen vollzogenen Abschuss einer Luftabwehrrakete, eine Position und eine Ausrichtung eines Effektorsystems 10 und dergleichen werden von dem betreffenden Effektorsystem 10 über die Funkverbindung 12 beziehungsweise das Datenkabel 8 an den Führungsgefechtsstand 4 gegeben zur Berücksichtigung bei der Ausgabe weiterer Einsatzbefehle.

Nach Abschuss einer Luftabwehrrakete wird diese über eine Funkverbindung vom Führungsgefechtsstand 4 oder direkt vom Sensorsystem 6 gesteuert. Steuerung ist auch vom Effektorsystem 10 aus möglich. Hierzu werden die vom Sensorsystem 6 erfassten Zieldaten verwendet und die Luftabwehrrakete wird in Richtung auf das Ziel gelenkt. Ist die Luftabwehrrakete so nahe an das zu bekämpfende Ziel herangekommen, dass sie mit ihrem Suchkopf das Ziel selbst erfasst hat, so wird die Steuerung der Luftabwehrrakete vom eigenen Suchkopf übernommen. Bis dahin wird sie von den Zieldaten des Sensorsystems 6 gesteuert, entweder vom Führungsgefechtsstand 4 aus oder direkt vom Sensorsystem 6, ggf. über eine Antenne des abschießenden Effektorsystems 10.

Zum Steuern der Effektorsysteme 10 und des Sensorsystems 6 umfasst der Führungsgefechtsstand 4 eine zentrale Steuereinheit, auch Sensor Fire and Weapon Control (SFWC) genannt. Diese Steuereinheit gibt die Einsatzbefehle an die Effektorsysteme 10 und das Sensorsystem 6 aus. Hierfür verarbeitet es die Daten aus dem Sensorsystem 6, insbesondere die Zieldaten, die Einsatzdaten aus den einzelnen Effektorsystemen 10, und Eingabedaten aus einer Feuerleitstelle, die von einem Bediener im Führungsgefechtsstand 4 eingegeben wurden, oder die von einer anderen Leitstelle, beispielsweise über eine Funkverbindung an den Führungsgefechtsstand 4 gesendet worden sind.

FIG 2 zeigt ein weiteres Luftabwehrsystem 2a in einer schematisierten Darstellung. Das Luftabwehrsystem 2a ist identisch zu dem Luftabwehrsystem 2 aus FIG 1 aufgebaut mit dem Unterschied, dass sowohl das Sensorsystem 6 aus FIG 1 bei der Konfiguration aus FIG 2 doppelt vorhanden ist, nämlich einmal als Sensorsystem 6a und einmal als Sensorsystem 6b. Hinsichtlich der Bezugszeichen in den Zeichnungen und der Beschreibung kann bemerkt werden, dass gleiche Bauteile in FIG 1 und FIG 2, die jedoch geringfügige Unterschiede aufweisen, zum Beispiel in Abmessung, Position und/oder Funktion, mit den gleichen Bezugsziffern gekennzeichnet sind. Wird die Bezugsziffer alleine ohne einen Bezugsbuchstaben erwähnt, wie z.B. in FIG 1 angeführt, so sind die entsprechenden Bauteile generalisiert angesprochen, sodass beispielsweise das zu dem Sensorsystem 6 aus FIG 1 Gesagte auf beide Sensorsysteme 6a und 6b aus FIG 2 zutrifft.

Auch der Führungsgefechtsstand 4a, 4b ist redundant vorhanden, wobei die beiden Führungsgefechtsstände 4a, 4b, wie die beiden Sensorsysteme 6a, 6b - von unterschiedlichen Herstellern stammen, sie also in ihrer Funktion sehr ähnlich, in ihrer Ausführung jedoch leicht unterschiedlich sein können. So kann es beispielsweise sein, dass unterschiedliche Sensorsysteme 6a, 6b und unterschiedliche Führungsgefechtsstände 4a, 4b aus unterschiedlichen Nationen in einem Luftabwehrsystem 2a zusammengeschaltet sind. Dies kann bei internationalen Militärübungen von Vorteil sein, oder bei Verwendung von Komponenten unterschiedlicher Hersteller in einem Luftabwehrsystem 2a vorteilhaft sein.

Die beiden in FIG 2 dargestellten Effektorsysteme 10a, 10b stammen ebenfalls von unterschiedlichen Herstellern. Der Übersichtlichkeit halber sind nur zwei Effektorsysteme 10a, 10b dargestellt, wobei jedoch - wie in FIG 1 dargestellt - auch weitere Effektorsysteme 10 im Luftabwehrsystem 2a vorhanden sein können.

Die Führungsgefechtsstände 4, die Sensorsysteme 6 und die Effektorsysteme 10 bilden die Hauptsystemkomponenten des Luftabwehrsystems 2. Sie sind jeweils nicht unmittelbar miteinander verbunden, sondern nur mittelbar über ein zentrales Integrationsmodul 16, über die die Hauptsystemkomponenten sternförmig miteinander verschaltet sind. Das Integrationsmodul 16 kann separat vorhanden sein oder in einen der Führungsgefechtsstände 4 integriert sein, wobei das Integrationsmodul 16 zusätzlich zur zentralen Steuereinheit des Führungsgefechtsstands 4 vorhanden ist. So kann das zentrale Integrationsmodul 16 beispielsweise als separate Baueinheit in einem Container einer der Führungsgefechtsstände 4 vorhanden sein. Die Datenkabel 8 beziehungsweise die Funkverbindungen 12 sind nun mit dem Integrationsmodul 16 verbunden und nicht, wie bisher üblich, direkt mit der zentralen Steuereinheit des Führungsgefechtsstands 4, da dieser auch nur mittelbar über das Integrationsmodul 16 mit den anderen Hauptsystemkomponenten verschaltet ist.

Das zentrale Integrationsmodul 16 weist für jede der Hauptsystemkomponenten jeweils eine als Hardware ausgeführte Schnittstelle 18 auf, beispielsweise in Form einer Steckverbindung zum Einstecken eines Steckers der jeweiligen Hauptsystemkomponente.

Von ihrem Aufbau her ist das zentrale Integrationsmodul 16 in einen äußeren Bereich und einen inneren Bereich aufgeteilt. Der äußere Bereich ist eine Wandlereinheit 20 und der innere Bereich ist ein zentraler Datenverteiler 22. Die Wandlereinheit 20 ist wiederum in einen äußeren Bereich und einen inneren Bereich unterteilt, wie in FIG 2 durch eine gestrichelte Linie angedeutet ist. Der äußere Bereich ist eine Verbindungseinheit 24 und der innere Bereich eine Anpassungseinheit 26. Die Verbindungseinheit 24 umfasst für jede Hauptsystemkomponente ein Verbindungselement 28a-f, und die Anpassungseinheit 26 umfasst für jede der Hauptsystemkomponenten ein Anpassungselement 30a-f. Zum inneren Bereich des zentralen Integrationsmoduls 16 gehören außerdem eine Datenprüfeinheit 32 und eine Anzahl von Kernfunktionen 34, die Gefechtsfunktionen zur Zielbekämpfung sind.

Jede der Hauptsystemkomponenten liefert im Betrieb sowohl Operationsdaten D_{O} als auch Steuerdaten D_{C}. Die Operationsdaten D_{O} beinhalten für die Luftabwehr relevante Daten, die von und zu anderen Hauptsystemkomponenten kommen beziehungsweise geschickt werden. Die Steuerdaten D_{C} hingegen sind Daten, die zur Steuerung der entsprechenden Hauptsystemkomponenten verwendet werden, und die für die anderen Hauptsystemkomponenten irrelevant sind. Beide Datentypen werden über die Schnittstellten 18 ausgetauscht.

Außerdem sendet und empfängt jede Hauptsystemkomponente ihre Daten in einem Datenprotokoll P_{K}, das individuell an die Hauptsystemkomponente angepasst sein kann. Die von der Hauptsystemkomponente zu empfangenden Daten sind also in diesem Datenprotokoll an die Hauptsystemkomponente zu senden.

Eine Aufgabe der Verbindungseinheit 24 besteht darin, die Datenprotokolle P_{K} der Hauptsystemkomponenten in ein einheitliches Systemprotokoll P_{S} zu wandeln. Die von innen in die Anpassungseinheit 26 eingegebenen und von dieser empfangenen Daten werden also grundsätzlich im systemeigenen Systemprotokoll P_{S} gesendet beziehungsweise empfangen. Entsprechend ist jedes Verbindungselement 28a-f dazu ausgeführt, das individuelle Komponentenprotokoll P_{K} in das allgemeine Systemprotokoll P_{S} zu wandeln. So ist beispielsweise das Verbindungselement 28a dazu programmiert, das Komponentenprotokoll P_{K1} des Sensorsystems 6a in das systemeigene System protokoll P_{S} zu wandeln. Selbstverständlich werden die Daten beim Senden zur Hauptsystemkomponente vom betreffenden Verbindungselement 28a-f aus dem systeminternen Protokoll P_{S} in das entsprechende Komponentenprotokoll P_{K} zurückgewandelt, im ausgeführten Beispiel in das Komponentenprotokoll P_{K1}.

In der Anpassungseinheit 26 werden die Operationsdaten D_{O} von den Steuerdaten D_{C} getrennt. Die Steuerdaten D_{C} der Hauptsystemkomponenten gelangen also nur bis zu dem ihr zugehörigen Anpassungselement 30 und nicht weiter zum zentralen Datenverteiler 22. Zu diesem werden ausschließlich die Operationsdaten D_{O} weitergeleitet beziehungsweise von diesem empfangen.

Zusätzlich zu dieser Daten trennenden Funktion der einzelnen Anpassungselemente 30 ist jedes der Anpassungselemente 30 mit einer Steuerfunktion ausgestattet zum Steuern der ihm zugehörigen Hauptsystemkomponente. Die Steuerung der Hauptsystemkomponente geschieht also von dem zugeordneten Anpassungselement 30 aus, das die hierfür notwendige Programmierung beziehungsweise Software und Hardware enthält. Zu jeder der Hauptsystemkomponenten ist also jeweils genau ein Verbindungselement 28 und ein Anpassungselement 30 unmittelbar zugeordnet, die zur Protokollwandlung beziehungsweise Datentrennung und Steuerung der Hauptsystemkomponente dienen und dazu vorbereitet sind.

Den Anpassungselementen 30 kommt außerdem die Aufgabe zu, die Operationsdaten D_{O} vom Komponentenformat in ein systeminternes Datenformat zu wandeln beziehungsweise vom systeminternen Datenformat in das Komponentenformat. Dies ist in FIG 2 dadurch angedeutet, dass die zwischen dem zentralen Datenverteiler 22 und den Anpassungselementen 30 ausgetauschten Operationsdaten D'_{O} mit gestrichenem Bezugszeichen versehen sind. Auf diese Weise können Unterschiede in Maßeinheiten, in Koordinatensystemen, oder in relativen Bezugsgrößen ausgeglichen werden, sodass die Operationsdaten D'_{O} im zentralen Datenverteiler 22 auch hinsichtlich ihres Formats nur standardisiert ausgetauscht werden.

Die Operationsdaten D_{O} werden von dem zentralen Datenverteiler 22 verteilt. Hierzu umfasst dieser eine Adressier- und Verteilungseinheit 36, die die Operationsdaten D_{O} an diejenige Hauptsystemkomponente adressiert, die dieser Operationsdaten D_{O} bedarf. Hierzu umfasst die Adressier- und Verteilungseinheit 36 eine Zuordnung zwischen der Art der operativen Daten D_{O} und den Hauptsystemkomponenten, sodass bereits aus der Art beziehungsweise der Klasse der Daten deutlich ist, woher diese Daten stammen und für wen diese Daten bestimmt sind. Alternativ kann der Datenverteiler 22 zusätzlich zu einer Adressier- und Verteilungseinheit 36 eine mit dieser Adressier- und Verteilungseinheit 36 zusammenwirkende Registrierungseinheit umfassen, in der sich die Anpassungselemente 30 für die Art von operativen Daten D_{O} registrieren können, die ihre Hauptsystemkomponente benötigt. Die Adressier- und Verteilungseinheit umfasst hierfür zweckmäßigerweise eine Zuordnung der Daten zu einer Art. Die Daten, für die ein Anpassungselement 30 registriert ist, können somit an die zugehörige Hauptsystemkomponente adressiert werden. In einer weiteren Alternative kann auf die Adressier- und Verteilungseinheit 36 verzichtet werden, wenn die Adressierfunktion in die Anpassungselemente 30 integriert wird, oder wenn die Anpassungselemente 30 in der Lage sind, sich aus dem allgemein vorliegenden Pool von Operationsdaten D_{O} diejenigen Daten selbständig herauszusuchen, die für ihre Hauptsystemkomponente relevant sind.

Weiter ist es möglich, in Abwandlung zum vorher Beschriebenen auch die Steuerfunktion zur Steuerung der entsprechenden Hauptsystemkomponente vom Anpassungselement 30 in das entsprechende Verbindungselement 28 umzusiedeln. Die Hauptsystemkomponenten werden dann also von der Verbindungseinheit 24 beziehungsweise ihren individuell zugeordneten Verbindungselementen 28 gesteuert. Dann ist es auch vorteilhaft, wenn die Trennung der Steuerdaten D_{C} von den Operationsdaten D_{O} in den betreffenden Verbindungselementen 28 erfolgt.

Die Datenprüfeinheit 32 dient dazu, die Integrität der zwischen den Hauptsystemkomponenten ausgetauschten Daten zu überprüfen. Hierzu ist die Datenprüfeinheit 32 in der Lage, sowohl die zwischen Hauptsystemkomponente und Verbindungselement 28 ausgetauschten Daten als auch die zwischen Verbindungselement 28 und Anpassungselement 30 ausgetauschten Daten, als auch die an den zentralen Datenverteiler 22 gegebenen und von diesem gesendeten Daten abzugreifen. Dies ist in FIG 2 nur durch die entsprechenden Pfeile zur Datenlinie zwischen dem Effektorsystem 10b und dem zentralen Datenverteiler 22 angedeutet. Die Verbindung zu den Datenlinien der anderen Hauptsystemkomponenten zum zentralen Datenverteiler 22 besteht in gleicher Weise und ist in der Zeichnung nur der Übersichtlichkeit halber weggelassen worden.

Die Datenprüfeinheit 32 fügt den von der entsprechenden Hauptsystemkomponente stammenden Daten eine Signatur hinzu, die charakteristisch für diese Daten ist. Verlassen Daten eine Komponente 22, 28, 30, so werden diese ausgehenden Daten anhand der Signatur überprüft um eine Datenkonsistenz festzustellen. Wurden beispielsweise durch Übertragungsfehler ein oder mehrere Byte unerwünschterweise verändert oder ausgelöscht, so kann durch Überprüfung der Signatur mit den ausgehenden Daten ein solcher Übertragungsfehler erkannt werden. Weiterhin umfasst die Datenprüfeinheit 32 systemkritische Funktionen betreffend die Wandlung der Daten im zentralen Datenverteiler 22 und/oder in den Komponenten 28, 30 redundant, um die von der Hauptsystemkomponente stammenden Daten der gleichen oder zumindest der teilweise gleichen Wandlung wie im Datenverteiler 22 und/ oder den Komponenten 28, 30 unterziehen zu können, um die Prüfung auf Konsistenz zu erleichtern und insbesondere systematische Fehler erkennen zu können. Bei Erkennen einer solchen Dateninkonsistenz hat die Datenprüfeinheit 32 hinsichtlich der Einsatzbefehle eine Veto-Kompetenz, sodass die Einsatzbefehle blockiert werden können und nicht zur entsprechenden Hauptsystemkomponente gelangen, zu der sie hätten gelangen sollen. Auf diese Weise können fehlerhafte Operationen der Effektorsysteme 10 vermieden werden.

Im Folgenden werden mehrere Beispiele zur Funktion des zentralen Integrationsmoduls 16 gegeben.

In einem ersten Ausführungsbeispiel beinhalten die Zieldaten des Sensorherstellers A des Sensorsystems 6a unter anderem die Position eines Ziels in lokalen Koordinaten relativ zur Sensorposition. Hierzu ist hinzuzufügen, dass ein Sensorsystem 6 ein internes Bezugssystem hat relativ zu dem die Position des erfassten Luftfahrzeugs angegeben wird. Die Ausrichtung des Bezugssystems relativ zu festen geostationären Koordinaten ist jedoch abhängig von der Ausrichtung des Fahrzeugs, auf dem das Sensorsystem 6 montiert ist. Das Datenformat der Operationsdaten D_{O} aus dem Sensorsystem 6a ist also ein lokales Datenformat. Dieses muss erst in ein beispielsweise geostationäres und damit allgemeines Datenformat umgewandelt werden, so dass die Operationsdaten D'_{O} dann im systeminternen Datenformat vorliegen. Eine Möglichkeit wäre das Bereitstellen der Zieldaten in sogenannten Earth-Centered, Earth-Fixed Daten (ECEF).

Anders herum werden die Operationsdaten D'_{O} auf dem Weg zu einer Hauptsystemkomponente wieder in das lokale Komponentenformat der empfangenden Hauptsystemkomponente gewandelt. Sollte beispielsweise ein Effektorsystem 10 für sich lokale Zieldaten relativ zur Kanisterposition erwarten, so würde das entsprechende Anpassungselement 30e, 30f auf Seiten des Effektorsystems 10a, 10b die Zieldaten aus dem allgemeinen systeminternen Datenformat D'_{O} in das lokale Datenformat D_{O} konvertieren und über das Verbindungselement 28e, 28f den entsprechenden Effektorsystemen 10a, 10b zur Verfügung stellen.

In einem weiteren Beispiel liefert das Radarsystem 6b zu den Zieldaten, wie Position, Geschwindigkeit, Flugrichtung, auch ein Maß zur Genauigkeit der Zieldaten. In diesem Beispiel soll das ein Wert zwischen Null und 20 sein, wobei 20 die höchstmögliche Genauigkeit des Radarsystems 6b darstellt. Eine mögliche Adaption für die Verwendung der Genauigkeit innerhalb des zentralen Datenverteilers 22 wäre das Bereitstellen der Genauigkeit mit Hilfe einer Fehler-Kovarianzmatrix. Hierzu benötigt das zugehörige Anpassungselement 30b weitere spezielle Leistungsparameter des Radarsystems 6b, die beispielsweise dem entsprechenden Anpassungselement 30b über eine Konfigurationsdatei bereitgestellt ist. Das Anpassungselement 30b fügt nun die Fehler-Kovarianzmatrix den Operationsdaten D'_{O} zu.

Weiter sei angenommen, dass der zuständige Führungsgefechtsstand 4b seinerseits für das Maß der Genauigkeit eine standardisierte Link16 Track Quality, die in der Regel einen Wert zwischen Null und 15 verwendet, erwartet. Das entsprechende Anpassungselement 30d zum Führungsgefechtsstand 4b kann nun auf einfache Art und Weise die Fehler-Kovarianzmatrix in die Track Quality von Link 16 überführen und über das Verbindungselement 28d an den Führungsgefechtsstand 4b übermitteln.

In einem weiteren Beispiel verfügt das Sensorsystem 6a über eine interne Überwachung seines technischen Zustands. Diese Überwachung erzeugt Statusinformationen, wie Temperaturen der Bauelemente, Füllstände von Betriebsmitteln, und so weiter, und stellt diese an seiner Schnittstelle 18 bereit. Als Übertragungsprotokoll dieser externen Schnittstelle 18 kommt ein spezielles Netzwerkprotokoll des Herstellers des Sensorsystems 6a zur Anwendung. Das zuständige Verbindungselement 28a wandelt die dem speziellen Netzwerkprotokoll zugrundeliegenden technischen Standards und setzt die detaillierten Statusinformationen, also Steuerdaten D_{C}, auf ein generisches Messaging-System, das innerhalb der Verbindungseinheit 24 zur Anwendung kommt, um. Das zugehörige Anpassungselement 30a nimmt die detaillierten Statusinformationen auf Basis des generischen Messaging-Systems entgegen und fasst diese Einzelinformationen, die für den Sensor 6a spezifisch sind, zusammen und erzeugt die systemrelevante Information, dass der Sensor 6a einsatzbereit ist. Diese Einsatzbereitschaft wird als Operationsdaten D'_{O} an den zentralen Datenverteiler 22 weitergegeben.

Die systemrelevante Information, dass der Sensor 6a einsatzbereit ist, wird über den zentralen Datenverteiler 22 an den Hauptsystemkomponenten zur Verfügung gestellt. Da die Information über den Sensorstatus für den Bediener des bodengebundenen Luftverteidigungssystems 2 in Führungsgefechtsstand 4b von Interesse ist, wird diese vom Anpassungselement 30b im generischen Messaging-System-Format aufgenommen. Da die Statusinformationen innerhalb der Hauptsystemkomponenten in diesem Beispiel in identische Kategorien aufgeteilt sind, braucht keine prozedurale Anpassung durchgeführt zu werden, sodass das Datenformat gleich bleiben kann. Das entsprechende Verbindungselement 28c setzt die Statusinformationen des Sensors 6a, nämlich die Einsatzbereitschaft, in die technischen Spezifika des Führungsgefechtsstands 4a um, in diesem Beispiel vom generischen Messaging-System auf den Kommunikationsstandard, der dem speziellen Netzwerkprotokoll des Herstellers des Führungsgefechtsstands 4a zugrunde liegt, welcher bei der Schnittstelle 18 zum Führungsgefechtsstand 4a zur Anwendung kommt. Der Führungsgefechtsstand 4a verfügt über die systemrelevante Information der Einsatzbereitschaft des Sensors 6a in dem benötigten Datenformat und in dem benötigten Datenprotokoll.

In einem weiteren Ausführungsbeispiel stellt die Hauptsystemkomponente Sensorsystem 6b die Position eines Flugobjekts fest und erfasst diese im sogenannten North-East-Down-Koordinatensystem NED und stellt diese Operationsdaten D_{O} an ihrer Schnittstelle 18 bereit. Das zuständige Verbindungselement 28b, welches die technischen Spezifika der Schnittstelle entsprechend dem Komponentenprotokoll des Sensorsystems 6b implementiert, nimmt diese Positionsdaten auf und setzt diese in das generische Messaging-Format um. Von den technischen Spezifika des Komponentenprotokolls des Sensorsystems 6b ist nun abstrahiert.

Das Anpassungselement 30b nimmt nun die Positionsinformation entgegen und setzt diese vom NED-Koordinatensystem in das ECEF-Koordinatensystem um. Von der prozeduralen Eigenschaft, dass der Sensor Positionen im lokalen Koordinatensystem bereitstellt, wurde damit eine Abstraktion durchgeführt. Die Positionsdaten stehen nun im systeminternen Datenformat des zentralen Datenverteilers 22 zur Verfügung. Sie sind für die Funktion des bodengebundenen Luftverteidigungssystems 2 relevant als Operationsdaten D'_{O}. Um mit einem Effektorsystem 10 wirken zu können, werden diese Operationsdaten D'_{O} vom systeminternen Datenformat umgewandelt, und zwar von dem zugehörigen Anpassungselement 30e, 30f des entsprechenden Effektorsystems 10a, 10b. Da das Effektorsystem 10a, 10b die Positionsdaten in einem lokalen Koordinatensystem benötigt, werden die Daten vom systeminternen Datenformat in Positionsdaten im lokalen Koordinatensystem umgewandelt und diese über das Verbindungselement 28e, 28f zur Schnittstelle 18 weitergeleitet.

Außerdem empfängt das Verbindungselement 28e, 28f die lokalen Positionsdaten und überträgt sie in das lokale Protokoll P_{K5}, P_{K6} des Effektorsystems 10a, 10b. Das Verbindungselement 28e, 28f implementiert dabei die technischen Spezifika der seriellen Schnittstelle des Effektorsystems 10a, 10b. Das Effektorsystem 10a, 10b erhält die Positionsdaten im lokalen Koordinatensystem an seiner existenten seriellen Schnittstelle und kann diese intern weiter verarbeiten.

### Bezugszeichenliste

- 2, 2a: Luftabwehrsystem
- 4, 4a, 4b: Führungsgefechtsstand
- 6, 6a, 6b: Sensorsystem
- 8: Datenkabel
- 10, 10a, 10b: Effektorsystem
- 12: Funkverbindung
- 14: Kanister
- 16: zentrales Integrationsmodul
- 18: Schnittstelle
- 20: Wandlereinheit
- 22: zentraler Datenverteiler
- 24: Verbindungseinheit
- 26: Anpassungseinheit
- 28a - f: Verbindungselement
- 30a - f: Anpassungselement
- 32: Datenprüfeinheit
- 34: Kernfunktion
- 36: Adressier- und Verteilungseinheit

## Patentansprüche

1. Verfahren zum Betreiben eines bodengebundenen Luftabwehrsystems (2) mit einer Gruppe von Hauptsystemkomponenten, die ein Sensorsystem (6), einen Führungsgefechtsstand (4) und ein Effektorsystem (10) beinhaltet, bei dem Sensordaten über ein zu bekämpfendes Ziel vom Sensorsystem (6) an den Führungsgefechtsstand (4) gegeben, dort bearbeitet und in bearbeiteter Form vom Führungsgefechtsstand (4) an das Effektorsystem (10) gegeben werden, das anhand der Daten das Ziel bekämpft,
**dadurch gekennzeichnet,**
**dass** das Luftabwehrsystem zusätzlich ein zentrales Integrationsmodul (16) mit einer Wandlereinheit (20) und einem zentralen Datenverteiler (22) beinhaltet, welches derart verwendet wird, dass Daten von allen Hauptsystemkomponenten jeweils durch die Wandlereinheit (20) zum zentralen Datenverteiler (22) geführt und dabei in der Wandlereinheit (20) von einem Komponentenprotokoll (P_{K}) in ein systeminternes Datenprotokoll (P_{S}) gewandelt werden, vom zentralen Datenverteiler (22) wieder über die Wandlereinheit (20) an eine oder mehrere Hauptsystemkomponenten gegeben werden, wobei die Wandlereinheit (20) die verteilten Daten wieder vom systeminternen Datenprotokoll (P_{S}) in ein Komponentenprotokoll (P_{K}) zurückwandelt.

2. Verfahren nach Anspruch 1,
**dadurch gekennzeichnet,**
**dass** die Wandlereinheit (20) für jede Hauptsystemkomponente ein eigenes Wandlerelement (28) aufweist, das die Daten von und zu ihrer Hauptsystemkomponente wandelt.

3. Verfahren nach Anspruch 1 oder 2,
**dadurch gekennzeichnet,**
**dass** die Wandlereinheit (20) die Hauptsystemkomponenten anhand von aus dem zentralen Datenverteiler (22) und/oder aus der Hauptsystemkomponente kommenden Operationsdaten (D_{O}) steuert.

4. Verfahren nach einem der vorhergehenden Ansprüche,
**dadurch gekennzeichnet,**
**dass** die Wandlereinheit (20) im Datenstrom von einer Hauptsystemkomponente vorliegende Steuerdaten (D_{C}) und Operationsdaten (D_{O}) voneinander trennt und nur die Operationsdaten (D_{O}) an den zentralen Datenverteiler (22) weiterleitet.

5. Verfahren nach einem der vorhergehenden Ansprüche,
**dadurch gekennzeichnet,**
**dass** die Wandlereinheit (20) von einer Hauptsystemkomponente empfangene Operationsdaten (D_{O}) von einem Komponentenformat in ein systeminternes Datenformat wandelt und in diesem Format an den zentralen Datenverteiler (22) weiterleitet.

6. Verfahren nach einem der vorhergehenden Ansprüche,
**dadurch gekennzeichnet,**
**dass** die Wandlereinheit (20) die für eine Hauptsystemkomponente relevanten Daten aus den Daten filtert, die im zentralen Datenverteiler (22) allgemein zur Verfügung gestellt werden.

7. Verfahren nach einem der vorhergehenden Ansprüche,
**dadurch gekennzeichnet,**
**dass** der zentrale Datenverteiler (22) eine Adressier- und Verteilungseinheit (36) aufweist, in der die von einer Hauptsystemkomponente aufgenommenen und gewandelten Operationsdaten (D_{O}) an eine andere Hauptsystemkomponente adressiert werden.

8. Verfahren nach einem der vorhergehenden Ansprüche,
**dadurch gekennzeichnet,**
**dass** die Wandlereinheit (20) eine äußere Verbindungseinheit (24), in der die Komponentenprotokolle (P_{K}) der Hauptsystemkomponenten in das systeminterne Datenprotokoll (P_{S}) bzw. vom systeminterne Datenprotokoll (P_{S}) in die Komponentenprotokolle (P_{K}) gewandelt werden, und eine mittlere Anpassungseinheit (26) aufweist, in der die Operationsdaten (D_{O}) von Komponentenformaten der Hauptsystemkomponenten in ein systeminternes Datenformat bzw. vom systeminternen Datenformat in die Komponentenformate gewandelt werden.

9. Verfahren nach einem der vorhergehenden Ansprüche,
**dadurch gekennzeichnet,**
**dass** das zentrale Integrationsmodul (26) eine Datenprüfeinheit (32) aufweist, die Originaldaten einer Hauptsystemkomponente aufnimmt, ihnen eine Signatur hinzufügt und in Richtung zum zentralen Datenverteiler (22) weitergibt, und die aus Richtung des zentralen Datenverteilers (22) kommende Daten mittels eines Signaturabgleichs auf Konsistenz mit den Originaldaten prüft.

10. Bodengebundenes Luftabwehrsystem (2) mit einer Gruppe von Hauptsystemkomponenten, die ein Sensorsystem (6), einen Führungsgefechtsstand (4) und ein Effektorsystem (10) beinhaltet, **gekennzeichnet durch** ein zentrales Integrationsmodul (16), an dem die Hauptsystemkomponenten sternförmig verbunden sind, und das zur zentralen Datenverteilung von und zu den Hauptsystemkomponenten vorbereitet ist, und das eine Wandlereinheit (20) und einen zentralen Datenverteiler (22) aufweist, die so miteinander verbunden und ausgeführt sind, dass die Daten von den Hauptsystemkomponenten an den Datenverteiler (22) und vom Datenverteiler (22) an die Hauptsystemkomponenten jeweils die Wandlereinheit (20) durchlaufen und dort von Datenprotokollen (P_{K}) der Hauptsystemkomponenten in ein systeminternes Datenprotokoll (P_{S}) bzw. vom systeminternen Datenprotokoll (P_{S}) in die Komponentenprotokolle (P_{K}) der Hauptsystemkomponenten gewandelt werden.

## Claims

1. Method for operating a ground-based anti-aircraft system (2) having a group of main system components that contains a sensor system (6), a tactical operation control (4) and an effector system (10), in which sensor data about a target for combat are passed from the sensor system (6) to the tactical operation control (4), are processed therein and are passed in processed form from the tactical operation control (4) to the effector system (10), which uses the data to combat the target,
**characterized**
**in that** the anti-aircraft system additionally contains a central integration module (16) having a converter unit (20) and a central data distributor (22), which module is used such that data from all main system components are routed to the central data distributor (22) by the converter unit (20) in each case and are converted from a component protocol (P_{K}) into a system-internal data protocol (P_{S}) in the converter unit (20), and are passed from the central data distributor (22) to one or more main system components, again via the converter unit (20), the converter unit (20) converting the distributed data back from the system-internal data protocol (P_{S}) into a component protocol (P_{K}).

2. Method according to Claim 1,
**characterized**
**in that** the converter unit (20) has a dedicated converter element (28) for each main system component, said converter element converting the data from and to its main system component.

3. Method according to Claim 1 or 2,
**characterized**
**in that** the converter unit (20) controls the main system components on the basis of operational data (D_{O}) coming from the central data distributor (22) and/or from the main system component.

4. Method according to one of the preceding claims,
**characterized**
**in that** the converter unit (20) isolates control data (D_{C}) and operational data (D_{O}) that are present in the data stream from a main system component from one another and forwards only the operational data (D_{O}) to the central data distributor (22).

5. Method according to one of the preceding claims,
**characterized**
**in that** the converter unit (20) converts operational data (D_{O}) received from a main system component from a component format into a system-internal data format and forwards them to the central data distributor (22) in this format.

6. Method according to one of the preceding claims,
**characterized**
**in that** the converter unit (20) filters the data that are relevant to a main system component from the data that are provided in the central data distributor (22) generally.

7. Method according to one of the preceding claims,
**characterized**
**in that** the central data distributor (22) has an addressing and distribution unit (36) in which the operational data (D_{O}) accepted and converted from one main system component are addressed to another main system component.

8. Method according to one of the preceding claims,
**characterized**
**in that** the converter unit (20) has an outer connecting unit (24), in which the component protocols (P_{K}) of the main system components are converted into the system-internal data protocol (P_{S}) or from the system-internal data protocol (P_{S}) into the component protocols (P_{K}), and an intermediate matching unit (26), in which the operational data (D_{O}) are converted from component formats of the main system components into a system-internal data format or from the system-internal data format into the component formats.

9. Method according to one of the preceding claims,
**characterized**
**in that** the central integration module (26) has a data checking unit (32) that accepts original data from a main system component, adds a signature to said data and forwards them in the direction of the central data distributor (22), and checks the data coming from the direction of the central data distributor (22) for consistency with the original data by means of a signature check.

10. Ground-based anti-aircraft system (2) having a group of main system components that contains a sensor system (6), a tactical operation control (4) and an effector system (10), **characterized by** a central integration module (16) to which the main system components are connected in star form and that is prepared for central data distribution from and to the main system components and that has a converter unit (20) and a central data distributor (22) that are connected to one another, and embodied, such that the data from the main system components to the data distributor (22) and from the data distributor (22) to the main system components pass through the converter unit (20) in each case and are converted therein from data protocols (P_{K}) of the main system components into a system-internal data protocol (P_{S}) or from the system-internal data protocol (P_{S}) into the component protocols (P_{K}) of the main system components.

## Revendications

1. Procédé pour le fonctionnement d'un système de défense aérienne basé à terre (2), avec un groupe de composants de système principaux comprenant un système de capteurs (6), un poste de commandement de direction (4) et un système d'effecteur (10), dans lequel des données de capteur relatives à une cible à combattre sont transmises du système de capteurs (6) au poste de commandement de direction (4), où elles sont traitées puis transmises sous forme traitée du poste de commandement de direction (4) au système d'effecteur (10), lequel combat la cible à l'aide des données,
**caractérisé en ce que**
le système de défense aérienne comprend en outre un module d'intégration central (16) avec une unité de convertisseur (20) et un distributeur de données central (22), lequel est utilisé de telle façon que des données de tous les composants de système principaux sont respectivement guidées vers le distributeur de données central (22) par le biais de l'unité de convertisseur (20), tout en étant converties dans l'unité de convertisseur (20), d'un protocole de composant (P_{K}) en un protocole de données interne au système (P_{S}), et de nouveau transmises par le biais de l'unité de convertisseur (20), du distributeur de données central (22) à un ou plusieurs composant de système principaux, l'unité de convertisseur (20) reconvertissant les données distribuées, du protocole de données interne au système (P_{S}) en un protocole de composant (P_{K}).

2. Procédé selon la revendication 1,
**caractérisé en ce que**
l'unité de convertisseur (20) comporte un élément de convertisseur propre (28) pour chaque composant de système principal, lequel convertit les données à partir de son composant de système principal et vers celui-ci.

3. Procédé selon la revendication 1 ou 2,
**caractérisé en ce que**
l'unité de convertisseur (20) commande les composants de système principaux à l'aide de données opérationnelles (D_{O}) venant du distributeur de données central (22) et/ou du composant de système principal.

4. Procédé selon l'une des revendications précédentes,
**caractérisé en ce que**
l'unité de convertisseur (20) sépare des données de commande (D_{C}) et des données opérationnelles (D_{O}) les unes des autres dans le flux de données venant d'un composant de système principal, et ne retransmet que les données opérationnelles (D_{O}) au distributeur de données central (22).

5. Procédé selon l'une des revendications précédentes,
**caractérisé en ce que**
l'unité de convertisseur (20) convertit des données opérationnelles (D_{O}) reçues à partir d'n composant de système principal, d'un format de composant en un format de données internes au système, et retransmet celles-ci dans ce format au distributeur de données central (22).

6. Procédé selon l'une des revendications précédentes,
**caractérisé en ce que**
l'unité de convertisseur (20) filtre des données pertinentes pour un composant de système principal à partir des données globalement mises à disposition dans le distributeur de données central (22).

7. Procédé selon l'une des revendications précédentes,
**caractérisé en ce que**
le distributeur de données central (22) comporte une unité d'adressage et de distribution (36), dans laquelle les données opérationnelles (D_{O}) reçues à partir d'un composant de système principal et converties sont adressées à un autre composant de système principal.

8. Procédé selon l'une des revendications précédentes,
**caractérisé en ce que**
l'unité de convertisseur (20) comporte une unité de liaison externe (24), dans laquelle les protocoles de composants (P_{K}) des composants de système principaux sont convertis vers le protocole de données interne au système (P_{S}) ou du protocole de données interne au système (P_{S}) vers les protocoles de composants (P_{K}), ainsi qu'une unité d'adaptation intermédiaire (26), dans laquelle les données opérationnelles (D_{O}) sont converties à partir de formats de composant des composants de système principaux en un format de données internes au système, ou à partir du format de données internes au système vers les formats de composant.

9. Procédé selon l'une des revendications précédentes,
**caractérisé en ce que**
le module d'intégration central (26) comporte une unité de vérification de données (32), laquelle reçoit des données d'origine d'un composant de système principal, leur attribue une signature et les retransmet au distributeur de données central (22), et laquelle vérifie les données provenant du distributeur de données central (22) à l'aide d'une comparaison de signature quant à la cohérence avec les données d'origine.

10. Système de défense aérienne basé à terre (2), avec un groupe de composants de système principaux comprenant un système de capteurs (6), un poste de commandement de direction (4) et un système d'effecteur (10),
**caractérisé par**
un module d'intégration central (16) auquel sont reliés les composants de système principaux en forme d'étoile, et lequel est conçu pour la distribution de données centrale à partir des composants de système principaux et vers ceux-ci, et lequel comporte une unité de convertisseur (20) et un distributeur de données central (22) conçue et reliés de telle façon l'un à l'autre, que les données transmises des composants de système principaux au distributeur de données (22) et du distributeur de données (22) aux composants de système principaux passent respectivement par l'unité de convertisseur (20), où elles sont converties à partir de protocoles de données (P_{K}) des composants de système principaux en un protocole de données interne au système (P_{S}), ou du protocole de données interne au système (P_{S}) vers les protocoles de composants (P_{K}) des composants de système principaux.
